# EUROPEAN PATENT APPLICATION

(11) **EP 4 641 358 A1**
(43) Date of publication of application: **29.10.2025**
(21) Application number: 24771040.3
(22) Date of filing: 11.01.2024
(51) Int. Cl.: G06F 3/041, G06F 1/16

(54) **ELECTRONIC DEVICE INCLUDING STRUCTURE FOR REDUCING DAMAGE TO DISPLAY**

(30) Priority: 15.03.2023 KR 20230033929; 18.04.2023 KR 20230050572; 09.06.2023 KR 20230074174
(71) Applicant: Samsung Electronics Co., Ltd., Suwon-si, Gyeonggi-do 16677 (KR)
(72) Inventor: OH, Hyunchul, Suwon-si, Gyeonggi-do 16677 (KR); KOO, Wonkyu, Suwon-si, Gyeonggi-do 16677 (KR); KIM, Yongwoon, Suwon-si, Gyeonggi-do 16677 (KR); SIM, Youngbae, Suwon-si, Gyeonggi-do 16677 (KR); JANG, Kyungok, Suwon-si, Gyeonggi-do 16677 (KR); CHOI, Manki, Suwon-si, Gyeonggi-do 16677 (KR); AN, Jinwan, Suwon-si, Gyeonggi-do 16677 (KR)
(74) Representative: Gulde & Partner
(86) International application number: PCT/KR2024/000560
(87) International publication number: WO 2024/191038

(57) **Abstract**

An electronic device is provided. According to an embodiment, the electronic device comprises: a display panel including a first region, a bending region extending and bent from the first region, and a second region extending from the bending region; a spacer disposed on one surface of the second region; and a display driving circuit disposed on the other surface of the second region, wherein the spacer includes a buffer region formed to correspond to at least a part of the region where the display driving circuit is positioned, when the second region is viewed from above.

## Description

### [Technical Field]

The present disclosure relates to an electronic device including a structure for reducing damage to a display.

### [Background Art]

An electronic device may include one or more electronic components for providing various functions to meet a user's demand. For example, the electronic device may include a display for providing visual information to a user. The display may be exposed to the outside of the electronic device to emit light for providing content.

### [Disclosure]

### [Technical Solution]

An electronic device is provided. According to an embodiment, the electronic device may comprise a display panel including a first region, a bending region that extends from the first region bends, and a second region extending from the bending region and facing the first region. According to an embodiment, the electronic device may comprise a spacer disposed on a surface of the second region. According to an embodiment, the electronic device may comprise display driving circuitry disposed on another surface of the second region opposite to the surface of the second region. According to an embodiment, the spacer may include an opening or a groove formed to correspond to at least a portion of the second region in which the display driving circuitry is located.

An electronic device is provided. According to an embodiment, the electronic device may comprise a display panel including a first region, a bending region that extends from the first region and bends, and a second region extending from the bending region and facing the first region. According to an embodiment, the electronic device may comprise a spacer disposed on a surface of the second region. According to an embodiment, the electronic device may comprise display driving circuitry disposed on another surface of the second region opposite to the surface of the second region. According to an embodiment, a portion of the spacer corresponding to at least a portion of the second region in which the display driving circuitry is positioned may be formed of a material having a lower hardness than another portion of the spacer.

An electronic device is provided. According to an embodiment, the electronic device may comprise a display panel including a first region, a bending region that extends from the first region and bends, and a second region extending from the bending region. According to an embodiment, the electronic device may comprise a spacer disposed on a surface of the second region. According to an embodiment, the electronic device may comprise display driving circuitry disposed on another surface of the second region. According to an embodiment, when viewing the second region from above, the spacer may include a buffer region formed to correspond to at least a portion of a region in which the display driving circuitry is positioned.

### [Description of the Drawings]

FIG. 1 is a block diagram of an electronic device in a network environment according to various embodiments.
FIG. 2 is a block diagram of a display module according to various embodiments.
FIG. 3 illustrates an exemplary electronic device according to an embodiment.
FIG. 4A is a cross-sectional view illustrating an example in which an exemplary electronic device according to an embodiment is cut along line A-A' of FIG. 3.
FIG. 4B is a perspective view of an exemplary display module according to an embodiment.
FIG. 4C is a cross-sectional view illustrating an example in which an exemplary electronic device according to an embodiment is cut.
FIG. 4D illustrates an example of a state in which an external force is applied to an exemplary electronic device according to an embodiment.
FIG. 5A is a top plan view illustrating an exemplary spacer and an air gap according to an embodiment.
FIG. 5B is a top plan view illustrating an exemplary spacer and an air gap according to an embodiment.
FIG. 5C is a top plan view illustrating an exemplary spacer and an air gap according to an embodiment.
FIG. 6 is a top plan view of an exemplary display according to an embodiment.
FIG. 7 is a top plan view of an exemplary display according to an embodiment.
FIG. 8A is a cross-sectional view illustrating another example in which an exemplary electronic device according to an embodiment is cut along line A-A' of FIG. 3.
FIG. 8B illustrates an example of a state in which an external force is applied to an exemplary electronic device according to an embodiment.
FIG. 9 is a cross-sectional view of an electronic device according to an embodiment.
FIG. 10A is a cross-sectional view of an exemplary electronic device according to an embodiment.
FIG. 10B is a cross-sectional view of an exemplary electronic device according to an embodiment.

### [Mode for Invention]

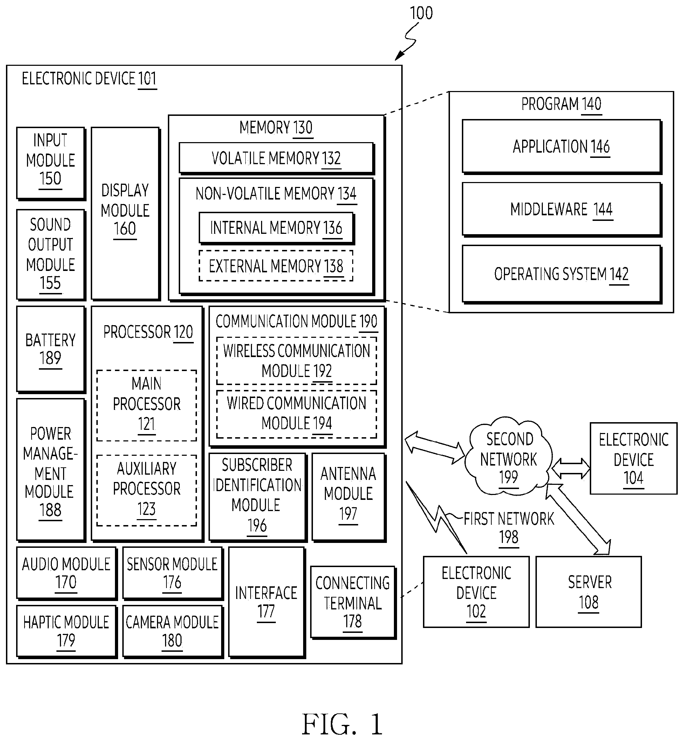

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

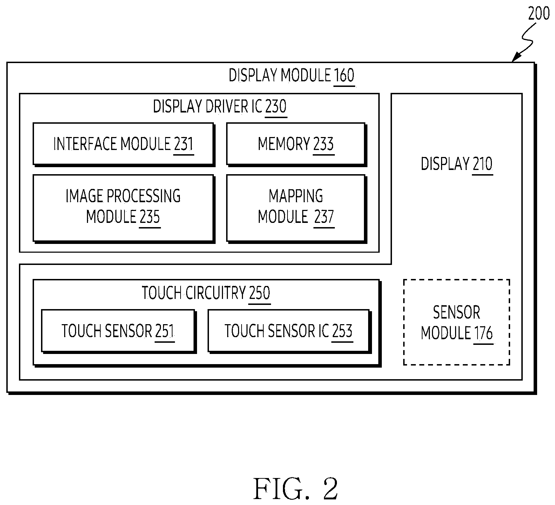

FIG. 2 is a block diagram 200 illustrating the display module 160 according to various embodiments.

Referring to FIG. 2, the display module 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 250 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data preprocessed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 250)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display module 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

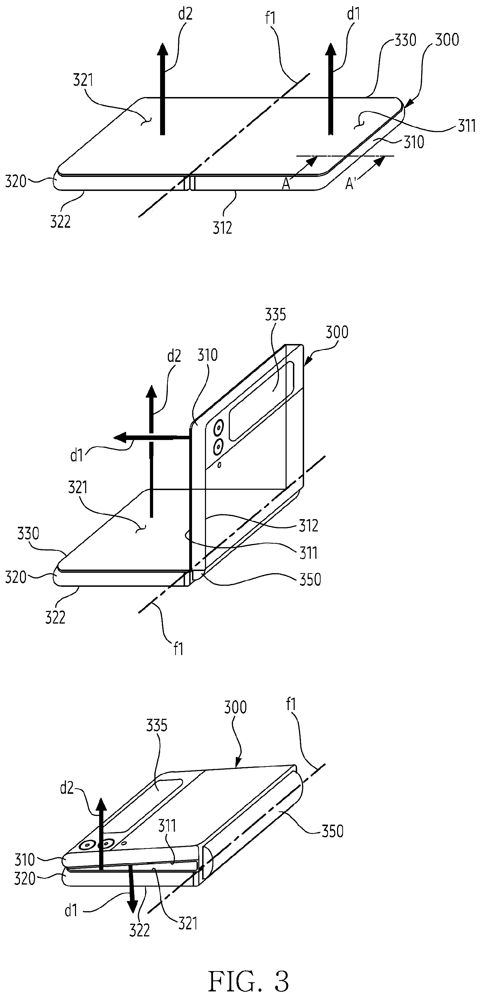

FIG. 3 illustrates an exemplary electronic device according to an embodiment.

Referring to FIG. 3, an electronic device 300 (e.g., the electronic device 101 of FIG. 1) may comprise a first housing 310, a second housing 320, and a display 330 (e.g., the display 210 of FIG. 2), at least one camera 340 (e.g., the camera module 180 of FIG. 1), and/or a hinge structure 350.

The first housing 310 and the second housing 320 may form at least a portion of an outer surface of the electronic device 300 capable of being gripped by a user. At least a portion of the outer surface of the electronic device 300 defined by the first housing 310 and the second housing 320 may contact a part of a user's body when the electronic device 300 is used by the user. According to an embodiment, the first housing 310 may include a first surface 311 and a second surface 312 facing the first surface 311 and spaced apart from the first surface 311. The second surface 312 may be opposite to the first surface 311. For example, a direction toward which the second surface 312 faces may be opposite to a first direction d1 toward which the first surface 311 faces.

According to an embodiment, the second housing 320 may include a third surface 321 and a fourth surface 322 facing the third surface 321 and spaced apart from the third surface 321. The fourth surface 322 may be opposite to the third surface 321. For example, a direction toward which the fourth surface 322 faces may be opposite to a second direction d2 toward which the third surface 321 faces. According to an embodiment, the second housing 320 may be rotatably coupled to the first housing 310.

The display 330 may be configured to display visual information. According to an embodiment, the display 330 may be disposed on the first surface 311 of the first housing 310 and the third surface 321 of the second housing 320 across the hinge structure 350. For example, the display 330 may be referred to as a flexible display. According to an embodiment, the display 330 may further include a sub-display 335 disposed on the second surface 322 of the first housing 310. For example, the sub-display 335 may be exposed to the outside of the electronic device 300 through the second surface 422.

According to an embodiment, the display 330 may include a window exposed toward the outside of the electronic device 300. The window may protect a surface of the display 330 and transmit visual information provided by the display 330 to the outside of the electronic device 300 by including a substantially transparent material. For example, the window may include glass (e.g., ultra-thin glass (UTG)) and/or polymer (e.g., polyimide (PI)).

At least one camera 340 may be configured to obtain an image based on receiving light from a subject outside the electronic device 300. According to an embodiment, the at least one camera 340 may be disposed inside the first housing 310, and at least a portion of the camera 340 may be visible through the second surface 312 of the first housing 310.

According to an embodiment, the hinge structure 350 may rotatably connect the first housing 310 and the second housing 320. The hinge structure 350 may be disposed between the first housing 310 and the second housing 320 of the electronic device 101 so that the electronic device 300 may be folded. The hinge structure 350 may change the electronic device 300 into an unfolding state in which the first direction d1 toward which the first surface 311 of the first housing 310 faces and the second direction d2 toward which the third surface 321 of the second housing 320 faces are substantially the same as each other, or a folding state in which the first surface 311 and the third surface 321 face each other. When the electronic device 300 is in the folding state, the first housing 310 and the second housing 320 may be stacked or overlapped by facing each other. According to an embodiment, when the electronic device 300 is in the folding state, the first direction d1 toward which the first surface 311 faces and the second direction d2 toward which the third surface 321 faces may be different from each other. For example, when the electronic device 300 is in the folding state, the direction d1 toward which the first surface 311 faces and the second direction d2 toward which the third surface 321 faces may be opposite to each other. However, it is not limited thereto. For example, the state of the electronic device 300 may include an intermediate state in which the first direction d1 toward which the first surface 311 faces and the second direction d2 toward which the third surface 321 faces are inclined with respect to each other. When the first direction d1 toward which the first surface 311 faces is inclined with respect to the second direction d2 toward which the third surface 321 faces, the first housing 310 may be inclined with respect to the second housing 320. For example, the intermediate state of the electronic device 300 may be referred to as a flex mode.

Although FIG. 3 illustrates that the display 330 is not exposed to the outside of the electronic device 300 in the folding state of the electronic device 300, but it is not limited thereto. For example, the second housing 320 may be rotatable with respect to the first housing 310 so that the second surface 312 and the fourth surface 322 face each other in the folding state of the electronic device 300. For example, the second housing 320 may be rotatable with respect to the first housing 310 so that the display 330 is directly exposed to the outside of the electronic device 300 in the folding state of the electronic device 300.

According to an embodiment, the electronic device 300 may be foldable based on a folding axis f1. The display 330 may be foldable about the folding axis f1, by a movement of the second housing 320 with respect to the first housing 310.

For example, the folding axis f1 may mean an imaginary line extending through the hinge cover 351 in a direction substantially perpendicular to a longitudinal direction of the electronic device 300, but is not limited thereto. For example, the folding axis f1 may be an imaginary line extending in a direction substantially parallel to the longitudinal direction of the electronic device 300. If the folding axis f1 extends in a direction substantially parallel to the longitudinal direction of the electronic device 300, the hinge structure 350 may extend in a direction parallel to the folding axis f1 to connect the first housing 310 and the second housing 320.

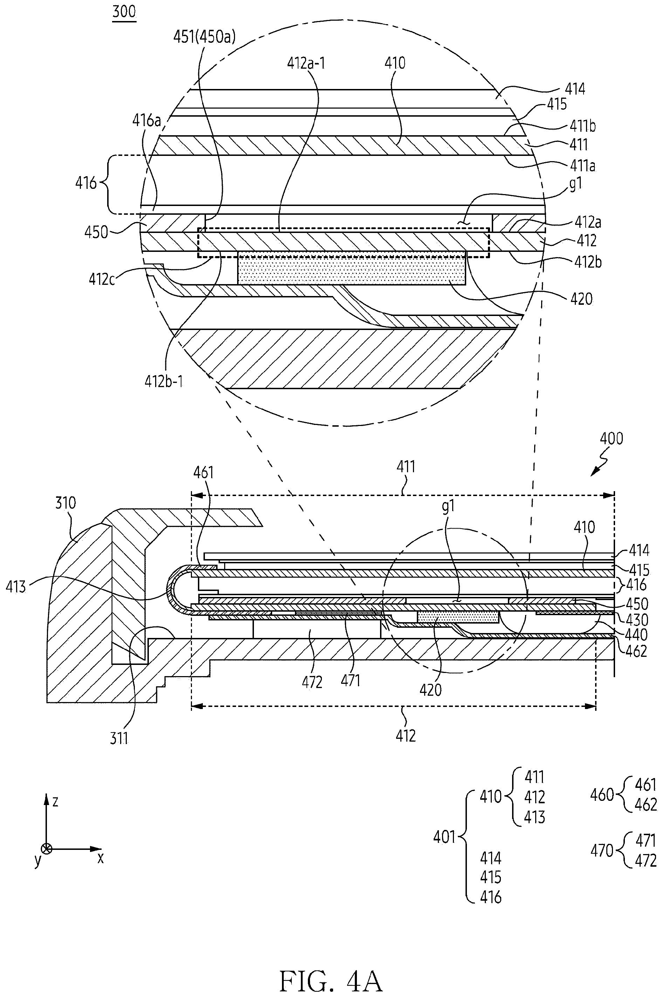

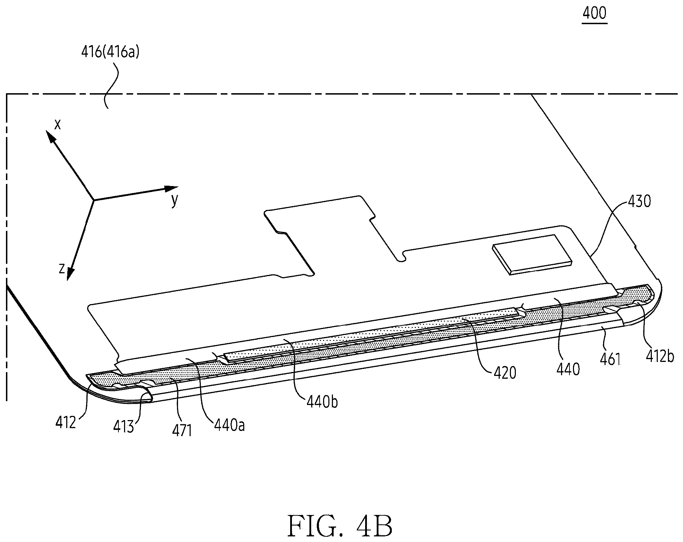

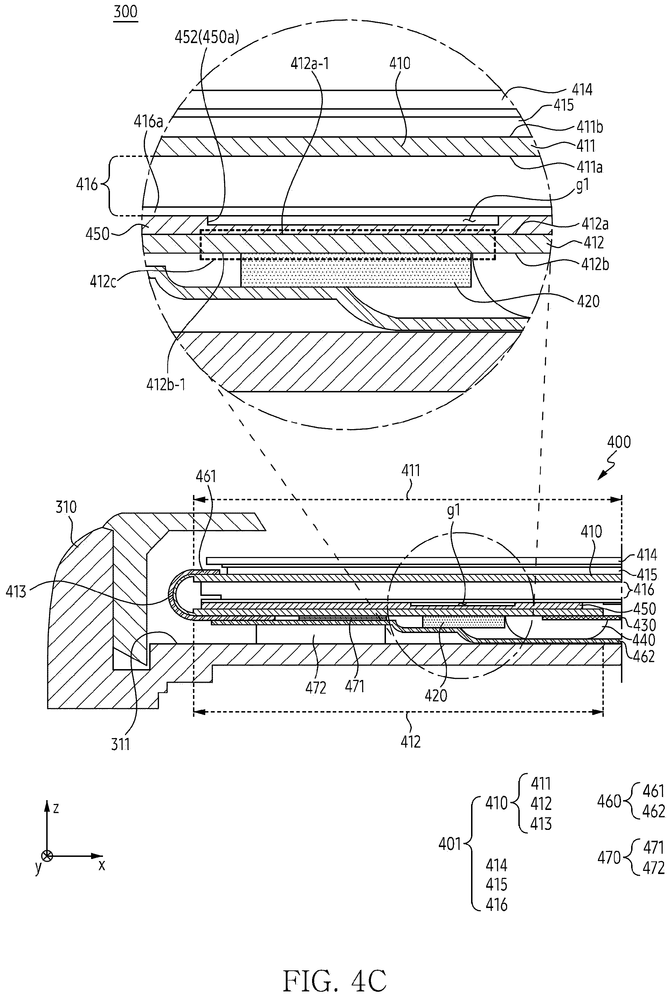

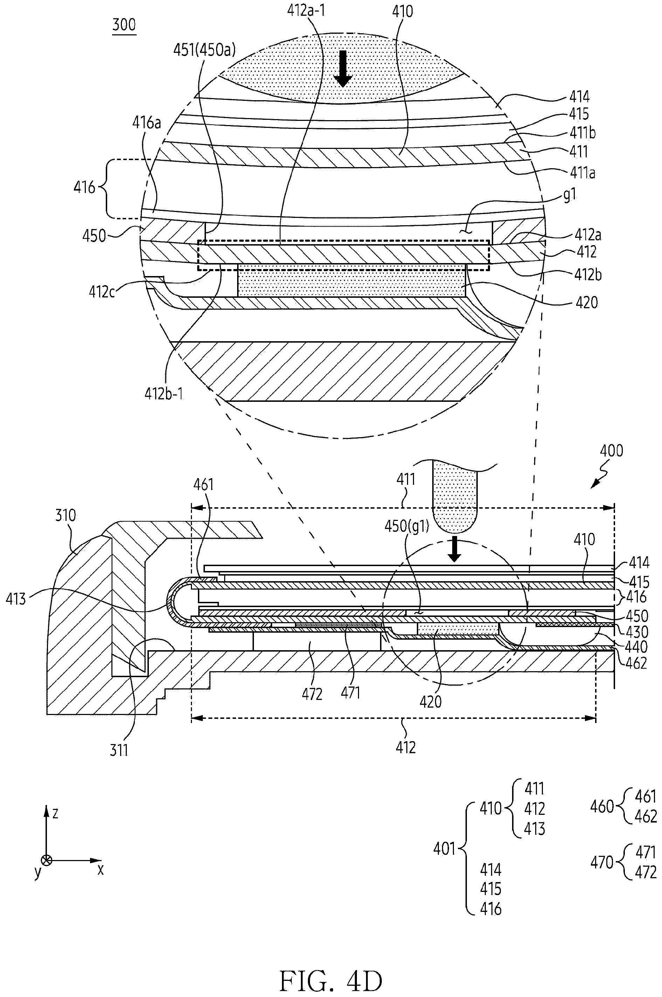

FIG. 4A is a cross-sectional view illustrating an example in which an exemplary electronic device according to an embodiment is cut along line A-A' of FIG. 3, FIG. 4B is a perspective view of an exemplary display module according to an embodiment, FIG. 4C is a cross-sectional view illustrating an example in which an exemplary electronic device according to an embodiment is cut, and FIG. 4D illustrates an example of a state in which an external force is applied to an exemplary electronic device according to an embodiment.

Referring to FIGS. 4A, 4B, 4C, and 4D, an electronic device 300 according to an embodiment may comprise a first housing 310 and/or a display module 400 (e.g., the display module 160 of FIGS. 1 and 2). Meanwhile, hereinafter, a relationship between the first housing 310 and the display module 400 will be described, but it is for convenience of explanation. For example, at least a portion of the description of the first housing 310 and the display module 400 may be applied substantially equally to a relationship between the second housing (e.g., the second housing 320 of FIG. 3) and the display module 400.

According to an embodiment, the first housing 310 may provide a portion of an outer surface of the electronic device 300. The first housing 310 may provide a space in which at least a portion of components of the electronic device 300 may be disposed. The first housing 310 may support at least a portion of the electronic device 300. For example, the first surface 311 of the first housing 310 may support the display module 400. The first housing 310 may be movable with respect to the second housing 320. A state of the electronic device 300 may be changed to a folding state or an unfolding state by a movement of the first housing 310 with respect to the second housing 320. Hereinafter, it is described that the display module 400 is disposed on a foldable device in which a state of the electronic device 300 may be changed to the folding state or the unfolding state, but it is only an example. For example, the display module 400 may be disposed on a rollable device in which at least a portion of the display panel 410 is rolled into the electronic device 300. For example, the display module 400 may be disposed on a bar-shaped device in which a shape of the display panel 410 is maintained.

According to an embodiment, the display module 400 may include a display 401 (e.g., the display 210 of FIG. 2 and/or the display 330 of FIG. 3), and/or display driving circuitry 420 (e.g., the display driving circuitry 230 of FIG. 2). According to an embodiment, the display 401 may include a display panel 410, a spacer 450, and/or a plurality of adhesive members 470.

According to an embodiment, the display panel 410 may be configured to emit light for providing visual information to a user of the electronic device 300. For example, if the display panel 410 is deformable by a movement of the second housing 320 with respect to the first housing 310 or a movement of the first housing 310 with respect to the second housing 320, the display panel 410 may be referred to as a flexible display. The display panel 410 may include a first region 411, a second region 412, and a bending region 413.

According to an embodiment, the first region 411 may include a plurality of pixels for emitting light. The plurality of pixels in the first region 411 may be configured to emit light along a direction (e.g., +z direction) toward which another surface 411b of the first region 411 opposite to a surface 411a of the first region 411 faces. The direction (e.g., +z direction) toward which the other surface 411b of the first region 411 faces may be opposite to a direction (e.g., -z direction) toward which the surface 411a of the first region 411 faces. For example, since the first region 411 is a portion of the display panel 410 including a plurality of pixels for displaying visual information, it may be referred to as a display portion or a display region.

According to an embodiment, the second region 412 may face the first region 411. For example, the second region 412 may be faced away from the first region 411. The second region 412 may be spaced apart by a height formed by a bending curvature of a bending region 413 that is extended from the first region 411 and bent. For example, the second region 412 may be spaced apart from the surface 411a of the first region 411 in a direction (e.g., -z direction) toward which the surface 411a of the first region 411 faces. For example, the second region 412 may be substantially parallel to the first region 411. For example, a surface 412a of the second region 412 may face the first region 411. For example, a direction (e.g., +z direction) toward which the surface 412a of the second region 412 faces may be opposite to a direction (e.g., -z direction) toward which the surface 411a of the first region 411 faces. For example, the surface 412a of the second region 412 may be referred to as a first surface of the second region 412. For example, when viewing the second region 412 along a direction (e.g., -z direction) toward which the surface 411a of the first region 411 faces or a direction (e.g., +z direction) toward which the other surface 411b of the first region 411 faces, the second region 412 may overlap the first region 411 (or be covered by the first region 411). According to an embodiment, the display driving circuitry 420 may be disposed (or positioned) on the second region 412. For example, the display driving circuitry 420 may be disposed (or positioned) on the other surface 412b of the second region 412. The other surface 412b of the second region 412 may be opposite to the surface 412a of the second region 412. For example, a direction (e.g., -z direction) toward which the other surface 412b of the second region 412 faces may be opposite to a direction (e.g., +z direction) toward which the surface 412a of the second region 412 faces. For example, the other surface 412b of the second region 412 may be referred to as a second surface of the second region 412. For example, since the second region 412 is a portion of the display panel 410 supporting electronic components for controlling driving of a plurality of pixels in the display panel 410, it may be referred to as a circuit part or a circuit region. According to an embodiment, the second region 412 may have flexibility. The second region 412 may be deformed by an external force having a magnitude within a specified range. The second region 412 may include polyimide (PI), but is not limited thereto.

According to an embodiment, the bending region 413 may be bent with respect to the first region 411 and/or the second region 412. For example, the bending region 413 may be bent to have a curvature with respect to the first region 411 and/or the second region 412. For example, the bending region 413 may be perpendicular to the first region 411 and/or the second region 412, but is not limited thereto. The bending region 413 may connect the first region 411 and the second region 413. According to an embodiment, the bending region 413 may have flexibility. According to an embodiment, the bending region 413 may have flexibility. For example, the bending region 413 may be deformed by an external force having a size within a specified range. For example, the bending region 413 may include polyimide (PI), but is not limited thereto. For example, the bending region 413 may be referred to as a bending portion.

According to an embodiment, the first region 411, the second region 412, and/or the bending region 413 of the display panel 410 may include one or more layers. For example, the first region 411 may include a pixel layer including a plurality of pixels, a substrate disposed under the pixel layer, and a thin film transistor (TFT) layer interposed between the pixel layer and the substrate. For example, a pixel layer may not be included in the second region 412 and/or bending region 413, but is not limited thereto. For example, the first region 411 and the second region 412 may further include an optical film layer or a protective film layer. According to an embodiment, since the display driving circuitry 420 is disposed on the second region 412 that is a portion of the display panel 410, a structure of the display panel 410 may be referred to as a chip on plastic (COP) structure. For example, the substrate may be referred to as a PI substrate formed of polyimide (PI), but is not limited thereto.

According to an embodiment, the display 401 may further include a window 414, a polarizing layer 415, and/or at least one support member 416. Hereinafter, it will be described that the display 401 includes all of the window 414, the polarizing layer 415, and/or the at least one support member 416, but is not limited thereto. At least one of the window 414, the polarizing layer 415, and/or the at least one support member 416 may be omitted (or removed) from the display 401. For example, the polarizing layer 415 and/or the at least one support member 416 may be omitted (or removed) from the display 401.

According to an embodiment, the window 414 may be exposed to the outside of the electronic device 300 (or the outside of the first housing 310). The window 414 may be disposed (or positioned) above the first region 411. The window 414 may be disposed (or positioned) on the other surface 411b of the first region 411. The window 414 may be spaced apart from the other surface 411b of the first region 411 in a direction (e.g., +z direction) toward which the other surface 411b of the first region 411 faces. According to an embodiment, the window 414 may be formed of a substantially transparent material for transmitting light. As the window 414 is substantially transparent, light emitted through the other surface 411b of the first region 411 may be emitted to the outside of the electronic device 300 by passing through the window 414.

According to an embodiment, the polarizing layer 415 may reduce the amount of light reflected in the display panel 410 after being incident from the outside of the electronic device 300. As the amount of light reflected in the display panel 410 is reduced by the polarizing layer 415, the visibility of the display panel 410 may be improved. The polarizing layer 415 may be interposed between the window 414 and the other surface 411b of the first region 411. The polarizing layer 415 may be attached to the window 414. For example, the display panel 410 may include an optically clear adhesive (OCA) that attaches the window 414 to the polarization layer 415 by being interposed between the polarization layer 415 and the window 414.

According to an embodiment, the at least one support member 416 may support the display panel 410. For example, the at least one support member 416 may include a plate 416a. The plate 416a may define (or form) at least a portion of an outer surface of the display module 400. The plate 416a may protect a plurality of layers in the display panel 410. The plate 416a may be formed of metal, but is not limited thereto. The plate 416a may also be formed of an insulating material. However, it is not limited thereto. The at least one support member 416 may include another plate for supporting the display panel 410 deformed by a movement of the second housing 320 with respect to the first housing 310. According to an embodiment, the at least one support member 416 may be disposed (or positioned) under the first region 411. For example, the at least one support member 416 may be disposed (or positioned) on the surface 411a of the first region 411.

According to an embodiment, the display driving circuitry 420 may control the display panel 410. For example, the display driving circuitry 420 may be configured to provide visual information through the display panel 410, based on receiving an image control signal and image data from a processor (e.g., the processor 120 of FIG. 1). According to an embodiment, the display driving circuitry 420 may be disposed (or positioned) on the second region 412 of the display panel 410. For example, the display driving circuitry 420 may be disposed (or positioned) on the other surface 412b of the second region 412. For example, the display driving circuitry 420 may be contacted on the other surface 412b of the second region 412. For example, the display driving circuitry 420 may be spaced apart from the printed circuit board 430. For example, the display driving circuitry 420 may be disposed (or positioned) on a portion 412b-1 of the other surface 412b of the second region 412. The display driving circuitry 420 may contact the portion 412b-1 of the other surface 412b of the second region 412. The area of the portion 412b-1 of the other surface 412b of the second region 412 may be greater than or equal to the area of the display driving circuitry 420, but is not limited thereto. For example, the area of the portion 412b-1 of the other surface 412b of the second region 412 may be smaller than the area of the display driving circuitry 420.

According to an embodiment, the printed circuit board 430 may be connected to the display panel 410. For example, the printed circuit board 430 may be connected to the second region 412. The printed circuit board 430 may be disposed (or positioned) on the second region 412. The printed circuit board 430 may be attached to the second region 412. The printed circuit board 430 may have rigidity compared to the second region 412. For example, the printed circuit board 430 may not be deformed by an external force having a magnitude within a specified range. For example, the printed circuit board 430 may include a member (not shown) having rigidity. For example, the member may include at least one of a metallic material, plastic, or carbon. Since the printed circuit board 430 includes the member having rigidity, it may have relatively rigidity compared to the second region 412. However, it is not limited thereto. For example, the printed circuit board 430 may have substantially the same flexibility as the second region 412. If the printed circuit board 430 has flexibility, the printed circuit board 430 may be referred to as a flexible printed circuit board (FPCB). The printed circuit board 430 may support a portion of electronic components of the display module 400. For example, the printed circuit board 430 may support a touch sensor IC (e.g., the touch sensor IC 253 of FIG. 2). However, it is not limited thereto. The printed circuit board 430 may support at least one of a fingerprint sensor IC, a pressure sensor IC, a proximity sensor IC, and an illuminance sensor IC. The printed circuit board 430 may be disposed (or positioned) under the first region 411. The printed circuit board 430 may be disposed (or positioned) on the surface 411a of the first region 411. For example, the printed circuit board 430 may be spaced apart from the surface 411a of the first region 411 along a direction (e.g., -z direction) toward which the surface 411a of the first region 411 faces. According to an embodiment, the printed circuit board 430 may be formed separately from the second region 412 and then connected to each other through at least one of solder or connector, but is not limited thereto.

According to an embodiment, a cover member 440 may reduce (or block) the inflow of foreign substances (e.g., moisture and/or dust) into an electronic component of the display module 400. For example, the cover member 440 may reduce (or block) the inflow of foreign substances through a gap between the second region 412 and the printed circuit board 430. The cover member 440 may be disposed (or positioned) between the second region 412 and the printed circuit board 430. The cover member 440 may be disposed (or positioned) along a boundary between the second region 412 and the printed circuit board 430. For example, as a solution containing a resin is cured, the cover member 440 may be formed. For example, referring to FIG. 4B, in a case that the cover member 440 is formed by curing of a solution containing a resin, a thickness of a portion 440a of the cover member 440 may be different from a thickness of another portion 440b of the cover member 440 due to the non-uniform application of the solution during the formation of the cover member 440. However, it is not limited thereto. For example, the cover member 440 may have a form of a tape including an adhesive material. For example, referring to FIG. 4B, in a case that the cover member 440 has a tape form including an adhesive material, the thickness of the portion 440a of the cover member 440 may be substantially the same as the thickness of the other part 440b of the cover member 440. For example, a thickness of the cover member 440 may be substantially constant along a boundary between the second region 412 and the printed circuit board 430. A thickness of one component may refer to a distance in a direction (e.g., +z direction and/or -z direction) parallel to a direction (e.g., -z direction) toward which the surface 411a of the first region 411 faces, and a corresponding expression may be used substantially the same below unless otherwise stated.

According to an embodiment, the spacer 450 may be a layer for filling at least a portion of a space between the first region 411 and the second region 412 formed according to bending of the display panel 410. The spacer 450 may support the second region 412. For example, the spacer 450 may have higher rigidity than the second region 412 so as to support the second region 412. For example, the spacer 450 may include polyethyleneterephthalate (PET), but is not limited thereto. The spacer 450 may be disposed (or interposed) between the first region 411 and the second region 412. For example, the spacer 450 may be disposed (or positioned) between the surface 411a of the first region 411 and the surface 412a of the second region 412. For example, the spacer 450 may be disposed (or positioned) between the plate 416a and the surface 412a of the second region 412a. For example, the spacer 450 may be in contact with the plate 416a and the surface 412a of the second region 412. According to an embodiment, the spacer 450 may include an adhesive material. For example, the spacer 450 may include an adhesive material disposed on a surface of the spacer 450 facing the first region 411. For example, the spacer 450 may include an adhesive material disposed on another surface of the spacer 450 opposite to the surface of the spacer 450 facing the first region 411. In a case that the adhesive material of the spacer 450 is disposed (or positioned) on the surface of the spacer 450 and the other surface of the spacer 450, the spacer 450 may be referred to as a double-sided tape. For example, a thickness of the spacer 450 may correspond to a distance between the plate 416a and the surface 412a of the second region 412.

According to an embodiment, the spacer 450 may include an air gap buffer region 450a. The buffer region 450a may be arranged with respect to the display driving circuitry 420. The buffer region 450a may be disposed (or positioned) on a portion 412a-1 of the surface 412a of the second region 412, which is opposite to a portion 412b-1 of the other surface 412b on which the display driving circuitry 420 is disposed. For example, the buffer region 450a may be in contact with the portion 412a-1 of the surface 412a. For example, the buffer region 450a may be disposed (or positioned) between the plate 416a and the portion 412a-1 of the surface 412a. A size of the portion 412a-1 of the surface 412a may be substantially the same as a size of the portion 412b-1 of the other surface 412b, but is not limited thereto. The size of the portion 412a-1 of the surface 412a may be different from the size of the portion 412b-1 of the other surface 412b. The buffer region 450a may be referred to as a buffer portion. The buffer region 450a may reduce a magnitude of an external force transmitted to the display driving circuitry 420 from the first region 411. For example, the external force may be transmitted from an object or body outside the electronic device 300, but is not limited thereto. For example, the buffer region 450a may include an opening 451 or a groove 452. The buffer region 450a may be formed as the opening 451 or the groove 452. The buffer region 450a may be formed of a material deformable by an external force.

According to an embodiment, as the opening 451 or the groove 452 is formed, the spacer 450 may provide (or include) an air gap g1 in at least a portion between the second region 412 and the first region 411. For example, referring to FIG. 4A, the opening 451 may be formed through at least a portion of the spacer 450. For example, a thickness of the opening 451 may correspond to a thickness of the spacer 450. For example, the thickness of the opening 451 may be substantially the same as the thickness of the spacer 450. However, it is not limited thereto. For example, referring to FIG. 4C, the thickness of the groove 452 may be substantially the same as a portion of the thickness of the spacer 450. As at least a portion of the spacer 450 is omitted, the opening 451 or the groove 452 may be formed. For example, as at least a portion of the spacer 450 is removed (or cut), the opening 451 or the groove 452 may be formed. As at least a portion of the spacer 450 is recessed into the spacer 450, the opening 451 or the groove 452 may be formed. The groove 452 may have a recess shape. The groove 452 may be referred to as a recess.

According to an embodiment, the opening 451 or the groove 452 may be formed in plurality.

According to an embodiment, a position of the opening 451 or the groove 452 may correspond to a position of at least a portion of the display driving circuitry 420. For example, when viewing the display panel 410 along a direction toward which the surface 412a of the second region 412 faces (e.g., +z direction) or the other surface 412b of the second region 412 faces (e.g., -z direction), the opening 451 or the groove 452 may overlap the display driving circuitry 420. By overlapping the display driving circuitry 420, the opening 451 or the groove 452 may reduce an impact transmitted to the display driving circuitry 420 from the outside of the electronic device 300. For example, in a case that the opening 451 or the groove 452 is omitted, an impact transmitted from the outside of the electronic device 300 may be transmitted to the display driving circuitry 420 through the spacer 450. The impact transmitted to the display driving circuitry 420 through the spacer 450 may cause damage to the display driving circuitry 420. In a case that the display driving circuitry 420 is to be damaged, the performance of the display panel 410 controlled by the display driving circuitry 420 may be reduced. The electronic device 300 according to an embodiment may provide a structure capable of reducing damage to the display driving circuitry 420 caused by an impact through the opening 451 or the groove 452 disposed between a portion 412c of the second region 412 and the first region 411. For example, the opening 451 or the groove 452 may reduce the amount of impact transmitted to the display driving circuitry 420 by providing an empty space between a portion 412c of the second region 412 corresponding to at least a portion of the display driving circuitry 420 and the first region 411. As the amount of impact transmitted to the display driving circuitry 420 is reduced, damage to the display driving circuitry 420 may be reduced.

For example, referring to FIG. 4D, a degree to which the buffer region 450a is deformed as an external force is transmitted may differ from a degree to which another region of the spacer 450 distinct from the buffer region 450a is deformed as an external force is transmitted. The other regions of the spacer 450 may be referred to as another portion of the spacer 450 other than the buffer region 450a. For example, a degree to which the buffer region 450a is deformed as an external force is transmitted may be greater than the degree to which the other region of the spacer 450 distinct from the buffer region 450a is deformed as an external force is transmitted. As an external force is transmitted to the display module 400 in a direction (e.g., -z direction) toward which the other surface 412b faces, a portion (e.g., the plate 416a) of the display 401 may be deformed, and thus a size of the opening 451 of the buffer region 450a may be reduced. As an external force is transmitted, a portion (e.g., the plate 416a) of the display 401 may be deformed, and thus a shape of the opening 451 of the buffer region 450a may be changed. While an external force is transmitted to the display module 400 in a direction (e.g., the -z direction) toward which the other surface 412b faces, a shape of the other region of the spacer 450 other than the buffer region 450a may be substantially maintained. Since the opening 451 is deformed as an external force is applied, a magnitude of the external force (or impact) transmitted to the display driving circuitry 420 may be reduced. As the magnitude of the external force (or impact) transmitted to the display driving circuitry 420 is reduced by the buffer region 450a, damage to the display driving circuitry 420 may be reduced.

On the other hand, in FIG. 4C, it is described that the opening 451 is deformed as an external force is transmitted to the display module 400 in a direction (e.g., -z direction) toward which the other surface 412b faces, but is not limited thereto. For example, the opening 451 may be deformed by an external force in a direction (e.g., +z direction) toward which the surface 412a faces.

According to an embodiment, a structure of a portion of components included in the display 401 corresponding to the display driving circuitry 420 may be different from another portion of the components. For example, a thickness of a portion of the window 414 disposed on the buffer region 450a may be different from a thickness of another portion of the window 414. The magnitude of the external force transmitted to the display driving circuitry 420 may be reduced. For example, a thickness of a portion of the polarizing layer 415 disposed on the buffer region 450a may be different from a thickness of a portion of the polarizing layer 415. For example, a thickness of a portion of the at least one support member 416 disposed on the buffer region 450a may be different from a thickness of another portion of the at least one support member 416.

According to an embodiment, each of a plurality of protection members 460 may protect components of the display module 400. For example, the plurality of protection members 460 may include a first protection member 461 and an insulating member 462. The first protection member 461 may protect the bending region 413. The first protection member 461 may be disposed on the bending region 413. For example, the first protection member 461 may cover (or surround) at least a portion of the bending region 413. For example, the first protection member 461 may include a flexible material. The insulating member 462 may reduce damage to the display module 400 due to static electricity. For example, the insulating member 462 may reduce static electricity transmitted to the display panel 410, the printed circuit board 430, and/or the display driving circuitry 420. According to an embodiment, the insulating member 462 may be disposed under the second region 412. The insulating member 462 may be spaced apart from the other surface 412b of the second region 412 in a direction (e.g., -z direction) toward which the other surface 412b of the second region 412 faces. The insulating member 462 may be disposed on the first protection member 461, the second region 412, the display driving circuitry 420, and/or the cover member 440. The insulating member 462 may cover (or surround) the first protection member 461, the second region 412, the display driving circuitry 420, and/or the cover member 440. For example, the insulating member 462 may be attached onto the first protection member 461, the second region 412, the display driving circuitry 420, and/or the cover member 440. For example, a thickness of a portion of the insulating member 462 overlapping the display driving circuitry 420 may be different from a thickness of another portion of the insulating member 462.

According to an embodiment, a plurality of adhesive members 470 may include a first adhesive member 471 and a second adhesive member 472. The first adhesive member 471 may attach the second region 412 onto the insulating member 462. For example, the first adhesive member 471 may be disposed (or interposed) between the second region 412 and the insulating member 462. For example, the first adhesive member 471 may be attached onto the other surface 412b of the second region 412. The second adhesive member 472 may attach the display module 400 onto the first housing 310. For example, the second adhesive member 472 may be disposed (or interposed) between the insulating member 462 and the first surface 311 of the first housing 310. The second adhesive member 472 may be in contact with the insulating member 462 and the first surface 311 of the first housing 310 between the insulating member 462 and the first surface 311 of the first housing 310.

As described above, the electronic device 300 according to an embodiment may provide a structure capable of reducing damage to the display module 400 by the opening 451 interposed between the first region 411 and the portion 412c of the second region 412 supporting the display driving circuitry 420.

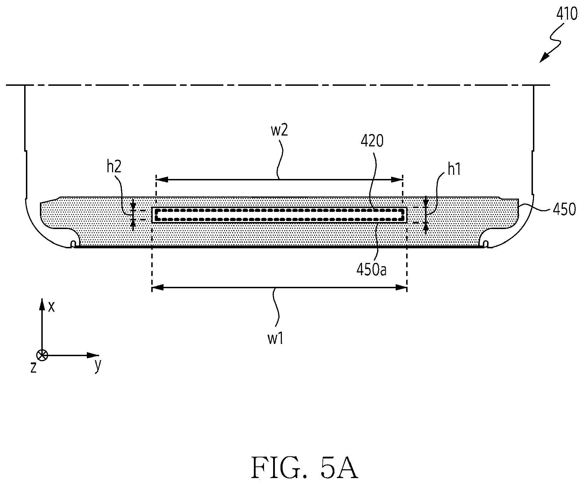

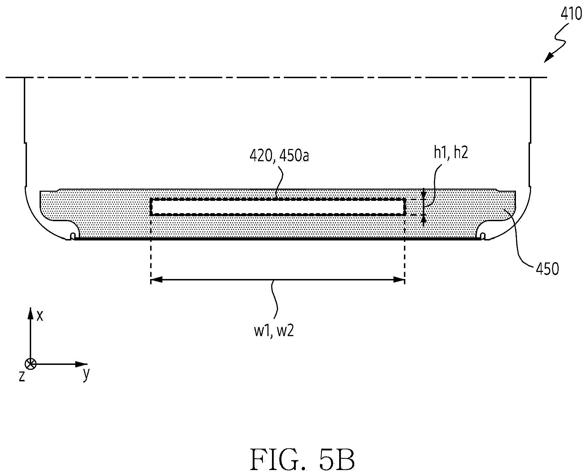

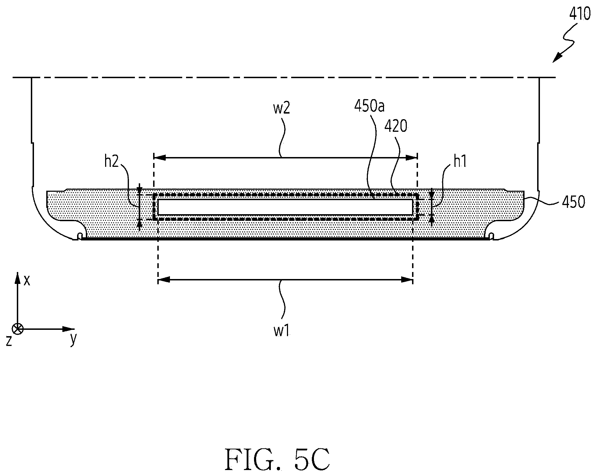

FIG. 5A is a top plan view illustrating an exemplary spacer and an air gap according to an embodiment, FIG. 5B is a top plan view illustrating an exemplary spacer and an air gap according to an embodiment, and FIG. 5C is a top plan view illustrating an exemplary spacer and an air gap according to an embodiment.

Referring to FIG. 5A, a size of the buffer region 450a (e.g., the opening 451 of FIG. 4A and/or the groove 452 of FIG. 4D) may be larger than a size of the display driving circuitry 420. For example, the area of the buffer region 450a may be larger than the area of the display driving circuitry 420 when the display panel 410 is viewed from above (e.g., along the -z direction). The area of a component may be referred to as the product of a width of the component and a height of the component. The height of the component may mean a distance in the +x direction or the -x direction, and a corresponding expression may be used substantially the same below unless otherwise stated. The width of the component may mean a distance in the +y direction or the -y direction, and a corresponding expression may be used substantially the same below unless otherwise stated. For example, a width w1 of the buffer region 450a may be greater than a width w2 of the display driving circuitry 420. For example, a height h1 of the buffer region 450a may be greater than a height h2 of the display driving circuitry 420. For example, as a state of an electronic device (e.g., the electronic device 300 of FIGS. 4A and 4B) is changed from an unfolding state to a folding state or from the folding state to the unfolding state, a position of the buffer region 450a and a position of the display driving circuitry 420 may differ. In other words, according to a change in the state of the electronic device 300, the buffer region 450a and the display driving circuitry 420 may be misaligned. In a case that the display driving circuitry 420 is misaligned, the buffer region 450a may not reduce an impact transmitted to the display driving circuitry 420. Since at least one of the height h1 and the width w1 of the buffer region 450a is greater than at least one of the height h2 and the width w2 of the display driving circuitry 420, the electronic device 300 according to an embodiment may provide a structure capable of reducing an impact transmitted to the display driving circuitry 420 independently of a change in the state of the electronic device 300.

For example, referring to FIG. 5B, a size of the buffer region 450a may be substantially the same as a size of the display driving circuitry 420. For example, the area of the buffer region 450a may be substantially the same as the area of the display driving circuitry 420 when the display panel 410 is viewed from above (e.g., along the -z direction). For example, the width w1 of the buffer region 450a may be substantially the same as the width w2 of the display driving circuitry 420. For example, the height h1 of the buffer region 450a may be substantially the same as the height h2 of the display driving circuitry 420.

For example, referring to FIG. 5C, a size of the buffer region 450a may be smaller than a size of the display driving circuitry 420. For example, the area of the buffer region 450a may be smaller than the area of the display driving circuitry 420 when the display panel 410 is viewed from above (e.g., the -z direction). For example, the width w1 of the buffer region 450a may be less than the width w2 of the display driving circuitry 420. For example, the height h1 of the buffer region 450a may be less than the height h2 of the display driving circuitry 420.

As described above, an electronic device (e.g., the electronic device 300 of FIG. 4A and FIG. 4B) according to an embodiment may provide a structure capable of reducing damage to the display panel 410 by the buffer region 450a overlapping the display driving circuitry 420.

On the other hand, in FIGS. 5A, 5B, and 5C, a shape of each of the buffer region 450a and the display driving circuitry 420 is illustrated to be rectangular, but the shape of each of the buffer region 450a and the display driving circuitry 420 is not limited thereto. The shape of each of the buffer region 450a and the display driving circuitry 420 may be circular. The shape of each of the buffer region 450a and the display driving circuitry 420 may be polygonal. In addition, the shape of the buffer region 450a may be different from the shape of the display driving circuitry 420, but is not limited thereto. For example, the shape of the buffer region 450a may be substantially the same as the shape of the display driving circuitry 420.

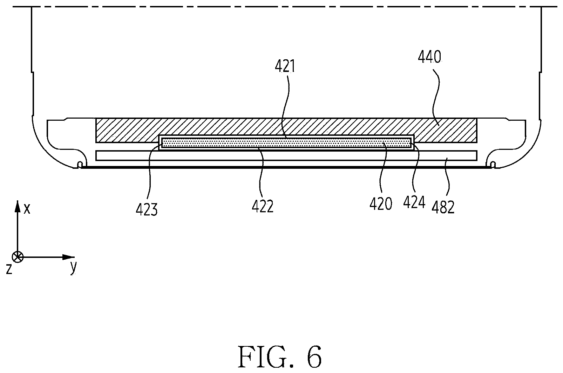

FIG. 6 is a top plan view of an exemplary display according to an embodiment.

Referring to FIG. 6, according to an embodiment, the display driving circuitry 420 may include a first outer surface 421, a second outer surface 422, a third outer surface 423, and/or a fourth outer surface 424. The first outer surface 421 may face the printed circuit board 430. The second outer surface 422 may be opposite to the first outer surface 421. For example, a direction (e.g., -x direction) toward which the second outer surface 422 faces may be opposite to a direction (e.g., +x direction) toward which the first outer surface 421 faces. The second outer surface 422 may face the second adhesive member 472. For example, the second outer surface 422 may be substantially parallel to the first outer surface 421, but is not limited thereto. The third outer surface 423 may connect the first outer surface 421 and the second outer surface 422. The third outer surface 423 may be connected to an end of the first outer surface 421 and an end of the second outer surface 422. The third outer surface 423 may extend from an end of the first outer surface 421 to an end of the second outer surface 422. The third outer surface 423 may be substantially perpendicular to the first outer surface 421 and/or the second outer surface 422, but is not limited thereto. The fourth outer surface 424 may connect the first outer surface 421 and the second outer surface 422. The fourth outer surface 424 may connect another end of the first outer surface 421 to another end of the second outer surface 422. The fourth outer surface 424 may extend from another end of the first outer surface 421 to another end of the second outer surface 422. The fourth outer surface 424 may be substantially perpendicular to the first outer surface 421 and/or the second outer surface 422, but is not limited thereto. The fourth outer surface 424 may be opposite to the third outer surface 423. For example, a direction (e.g., +y direction) toward which the fourth outer surface 424 faces may be opposite to a direction (e.g., -y direction) toward which the third outer surface 423 faces.

According to an embodiment, at least a portion of the display driving circuitry 420 may be surrounded (or covered) by a second adhesive member 482 and a cover member 440. As the display driving circuitry 420 is surrounded (or covered) by the second adhesive member 482 and the cover member 440, an impact transmitted to the display driving circuitry 420 may be dispersed to at least one of the second adhesive member 482 and the cover member 440. As an impact (or external force) transmitted to the display driving circuitry 420 is dispersed to at least one of the second adhesive member 482 and the cover member 440, damage to the display driving circuitry 420 may be reduced. For example, a thickness of the cover member 440 may be thicker than a thickness of the display driving circuitry 420 to reduce the impact (or external force) transmitted to the display driving circuitry 420, but is not limited thereto.

According to an embodiment, the cover member 440 may surround at least a portion of the display driving circuitry 420. The cover member 440 may surround at least a portion of the display driving circuitry 420 when viewing the display panel 410 from above (e.g., along the -z direction). The cover member 440 may cover the first outer surface 421, at least a portion of the third outer surface 423, and at least a portion of the fourth outer surface 424 of the display driving circuitry 420. For example, the cover member 440 may cover the first outer surface 421, a portion of the third outer surface 423, and a portion of the fourth outer surface 424 of the display driving circuitry 420. For example, the cover member 440 may cover the first outer surface 421, the entire region of the third outer surface 423, and the entire region of the fourth outer surface 424 of the display driving circuitry 420. The second outer surface 422 may face the second adhesive member 482. The second outer surface 422 may not be covered (or not surrounded) by the cover member 440.

As described above, an electronic device (e.g., the electronic device 300 of FIG. 4A and FIG. 4B) according to an embodiment may provide a structure capable of reducing damage to the display driving circuitry 420 by the cover member 440 at least partially surrounding the display driving circuitry 420 and the second adhesive member 482.

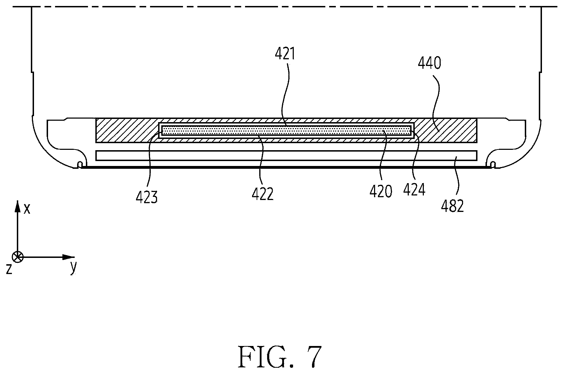

FIG. 7 is a top plan view of an exemplary display according to an embodiment.

The structure of FIG. 7 may be a structure in which the structure of the cover member 440 is partially changed in the structure of FIG. 6, and a redundant description may not be repeated below.

Referring to Fig. 7, according to an embodiment, the cover member 440 may surround the entire region of the display driving circuitry 420. When viewing the display panel 410 from above (e.g., along the -z direction), the cover member 440 may surround the entire region of the display driving circuitry 420. The cover member 440 may cover (or surround) the first outer surface 421, the second outer surface 422, the third outer surface 423, and/or the fourth outer surface 424 of the display driving circuitry 420. For example, the cover member 440 may cover (or surround) the entire region of the first outer surface 421, the entire region of the second outer surface 422, the entire region of the third outer surface 423, and/or the entire region of the fourth outer surface 424. For example, a thickness of the cover member 440 may be thicker than a thickness of the display driving circuitry 420 to reduce an impact transmitted to the display driving circuitry 420, but is not limited thereto.

As described above, an electronic device (e.g., the electronic device 300 of FIG. 4A and FIG. 4B) according to an embodiment may provide a structure capable of reducing damage to the display driving circuitry 420 by the cover member 440 fully covering the display driving circuitry 420 and the second adhesive member 482.

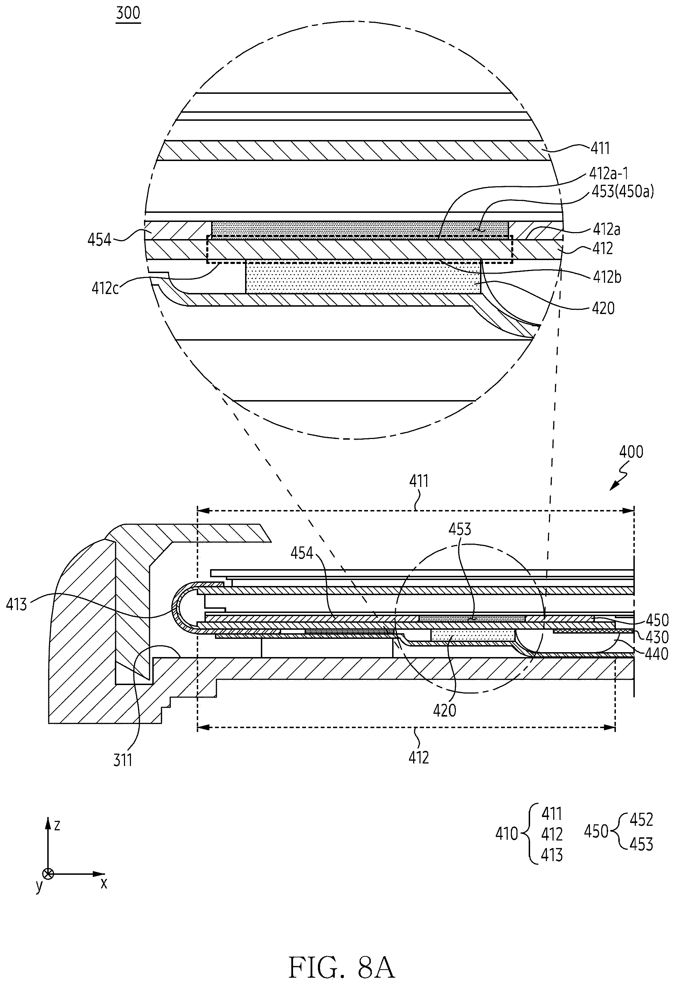

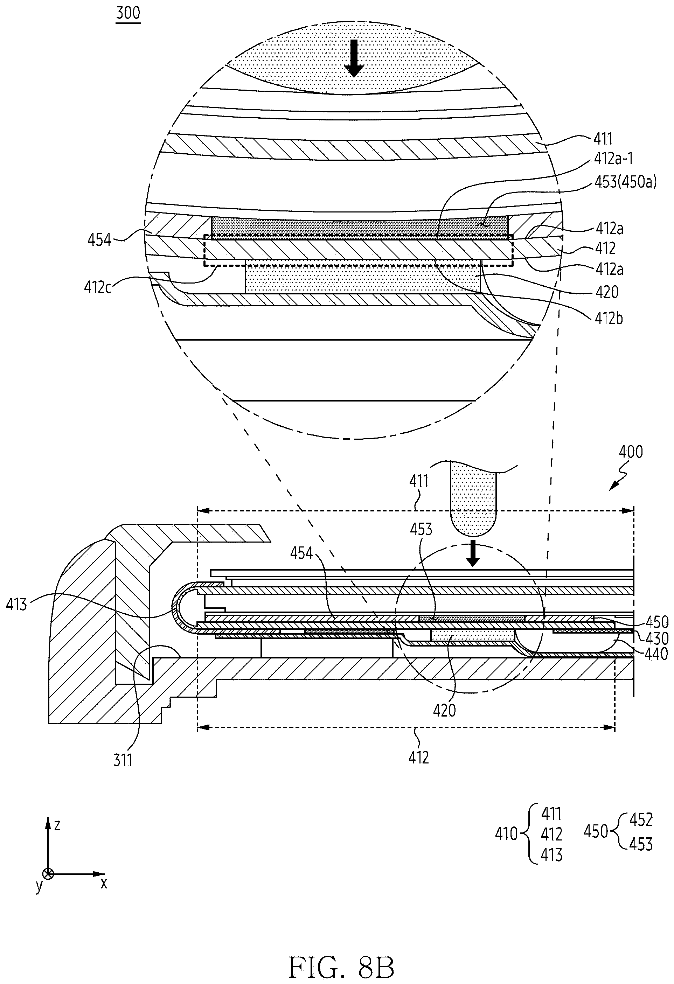

FIG. 8A is a cross-sectional view illustrating another example in which an exemplary electronic device according to an embodiment is cut along line A-A' of FIG. 3, and FIG. 8B illustrates an example of a state in which an external force is applied to an exemplary electronic device according to an embodiment.

Since the display module 400 of FIG. 8A and FIG. 8B may be the display module 400 from which the opening 451 is removed (or omitted) from the display module 400 of FIG. 4A and/or FIG. 4B, a redundant description will be omitted.

Referring to FIGS. 8A and 8B, according to an embodiment, the buffer region 450a of the spacer 450 may include a portion 453 of the spacer 450. The buffer region 450a of the spacer 450 may be formed as a portion 453 of the spacer 450. The portion 453 of the spacer 450 may buffer an impact transmitted to the display driving circuitry 420. According to an embodiment, the buffer region 450a and another region of the spacer 450 other than the buffer region 450a may be composed (or formed) of different materials. For example, a hardness (or rigidity) of the portion 453 of the spacer 450 may be different from a hardness (or rigidity) of another portion 454 of the spacer 450. The portion 453 of the spacer 450 may be composed of a material having a hardness (or rigidity) different from that of the other portion 454. For example, a hardness (or rigidity) of the portion 453 of the spacer 450 may be lower than a hardness (or rigidity) of the other portion 454 of the spacer 450. For example, a material constituting (or forming) the buffer region 450a may have higher elastic than a material constituting (or forming) another region of the spacer 450 other than the buffer region 450a. For example, the portion 453 of the spacer 450 may include an elastically deformable material. However, it is not limited thereto. The portion 453 of the spacer 450 may correspond to at least a portion of the display driving circuitry 420. The portion 453 of the spacer 450 may correspond to a portion 412c of the second region 412 in which the display driving circuitry 420 is positioned. The portion 453 of the spacer 450 may be disposed on the surface 412a of the second region 412. The portion 453 of the spacer 450 may be disposed between the first region 411 and the display driving circuitry 420. The other portion 454 of the spacer 450 may be connected to the portion 453 of the spacer 450. As the portion 453 of the spacer 450 corresponding to the display driving circuitry 420 has a relatively weak hardness, the impact transmitted to the display driving circuitry 420 may be reduced by the portion 453 of the spacer 450. According to an embodiment, the portion 453 of the spacer 450 may be disposed on a portion 412a-1 of a surface 412a of the second region 412. The portion 453 of the spacer 450 may be in contact with the portion 412a-1 of the surface 412a.

According to an embodiment, a degree to which the portion 453 of the spacer 450 is deformed as an external force is transmitted may be different from a degree to which the other portion 454 of the spacer 450 is deformed as an external force is transmitted. For example, the degree to which the portion 453 of the spacer 450 is deformed as an external force is transmitted may be greater than the degree to which the other portion 454 of the spacer 450 is deformed as an external force is transmitted. For example, as an external force in a direction (e.g., the -z direction) toward which the other surface 412b faces is transmitted to the display module 400, the portion 453 of the spacer 450 may be compressed. As the portion 453 of the spacer 450 is compressed, a magnitude of the external force (or impact) transmitted to the display driving circuitry 420 may be reduced.

According to an embodiment, a size of the portion 453 of the spacer 450 may correspond to a size of the display driving circuitry 420. For example, the size of the portion 453 of the spacer 450 may be larger than the size of the display driving circuitry 420. However, it is not limited thereto. For example, the size of the portion 453 of the spacer 450 may be substantially the same as the size of the display driving circuitry 420. For example, the size of the portion 453 of the spacer 450 may be smaller than the size of the display driving circuitry 420.

As described above, the electronic device 300 according to an embodiment may provide a structure capable of reducing damage to the display module 400 by the portion 453 of the spacer 450 having a hardness different from the other portion 454 of the spacer 450 so that the impact transmitted to the display driving circuitry 420 is reduced.

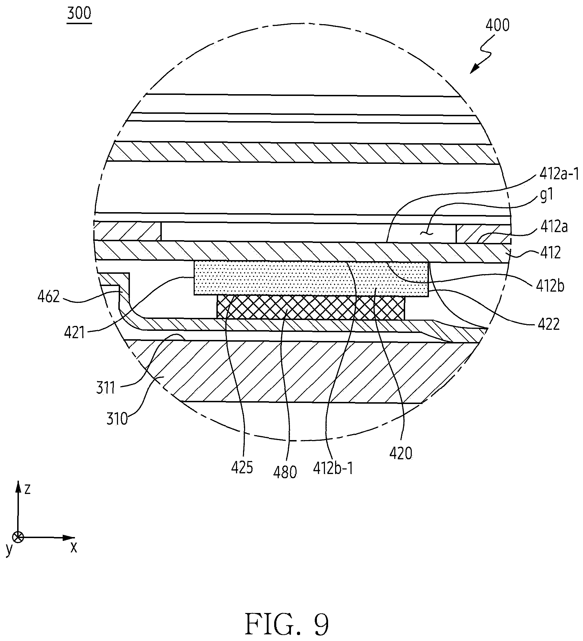

FIG. 9 is a cross-sectional view of an electronic device according to an embodiment.

Since the display module 400 of FIG. 9 may be a display module 400 to which the buffer member 480 is added from the display module 400 of FIG. 4A, a redundant description will be omitted.

Referring to FIG. 9, according to an embodiment, the display module 400 may include a buffer member 480. The buffer member 480 may reduce a magnitude of an impact (or external force) transmitted to the display driving circuitry 420 from the outside of the electronic device 300. According to an embodiment, the buffer member 480 may be deformable. The buffer member 480 may be compressed while an external force (or impact) is transmitted from the outside of the electronic device 300. The display driving circuitry 420 may be positioned between an air gap g1 on a portion 412a of the surface 412a and the buffer member 480 on a portion 412b-1 of the other surface 412b. Since the buffer member 480 is deformed while an external force (or impact) is transmitted, damage to the display driving circuitry 420 may be reduced. For example, the buffer member 480 may be formed of an elastic material. For example, the buffer member 480 may be at least one of a rubber and a sponge. However, it is not limited thereto. According to an embodiment, the buffer member 480 may be disposed on a surface 425 of the display driving circuitry 420.

According to an embodiment, the buffer member 480 may cover the surface 425 of the display driving circuitry 420. For example, the buffer member 480 may be in contact with the surface 425 of the display driving circuitry 420. The buffer member 480 may be disposed (or interposed or positioned) between the surface 425 of the display driving circuitry 420 and the insulating member 462. The buffer member 480 may be in contact with the surface 425 of the display driving circuitry 420 and the insulating member 462.

FIG. 9 illustrates that the buffer member 480 is disposed only on the surface 425 of the display driving circuitry 420, but it is not limited thereto. For example, the buffer member 480 may cover at least one of the surface 425, the first outer surface 421, and the second outer surface 422 of the display driving circuitry 420. Meanwhile, FIG. 9 illustrates that the buffer member 480 is added to the display module 400 of FIG. 4A, but this is for convenience of explanation. For example, the description of the buffer member 480 may be applied identically to each of the display modules 400 of FIG. 4C, FIG. 8A, and FIG. 8B.

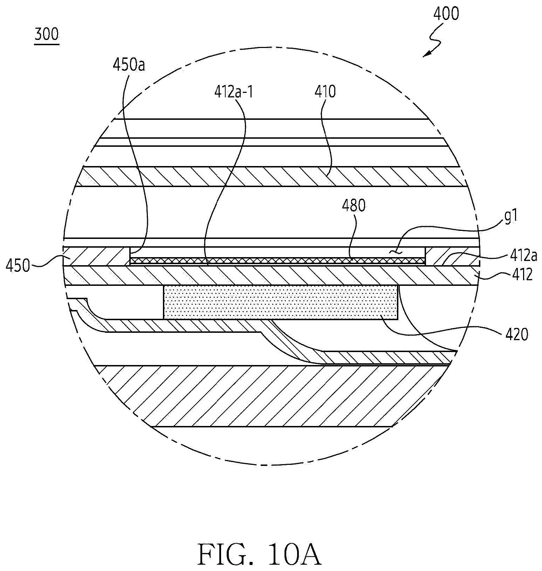

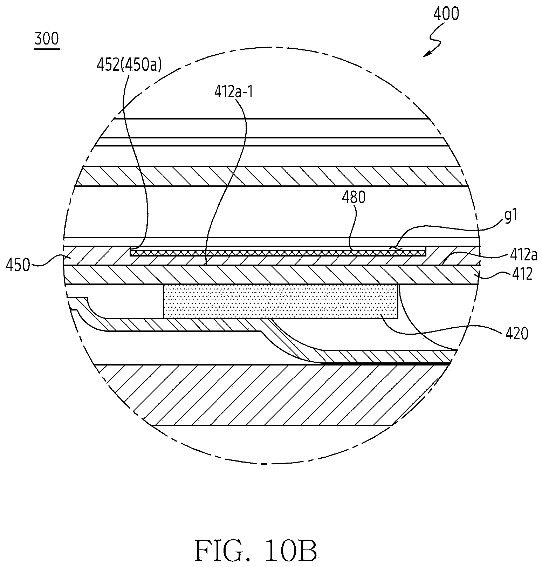

FIG. 10A is a cross-sectional view of an exemplary electronic device according to an embodiment, and FIG. 10B is a cross-sectional view of an exemplary electronic device according to an embodiment.

Since the display module 400 of FIG. 10A may be the display module 400 to which the buffer member 480 is added from the display module 400 of FIG. 4A, a redundant description will be omitted. Since the display module 400 of FIG. 10B may be the display module 400 to which the buffer member 480 is added from the display module 400 of FIG. 4C, a redundant description will be omitted.

According to an embodiment, the buffer member 480 may be disposed in the buffer region 450a of the spacer 450. The buffer member 480 may be accommodated within the buffer region 450a. The air gap g1 may be disposed (or positioned) on the buffer member 480. The buffer member 480 may be formed in at least a portion of the opening 451 or the groove 452 of the spacer 450. For example, referring to FIG. 10A, the buffer region 450a may be formed as the opening 451. The buffer member 480 may be disposed within the opening 451 of the buffer region 450a. The buffer member 480 may be accommodated within the opening 451. The buffer member 480 may fill a portion of the opening 451. The buffer member 480 may be spaced apart from the portion 412a-1 of the surface 412a of the second region 412 in the opening 451, but is not limited thereto. The buffer member 480 may be in contact with the portion 412a-1 of the surface 412a of the second region 412 in the opening 451.

For example, referring to FIG. 10B, the buffer region 450a may be formed as the groove 452. The buffer member 480 may be accommodated within the groove 452 of the buffer region 450a. The buffer member 480 may be accommodated within the groove 452. The buffer member 480 may fill a portion of the opening 451. For example, the buffer member 480 may be spaced apart from the portion 412a-1 of the surface 412a of the second region 412 in the groove 452.

As described above, the electronic device 300 according to an embodiment may provide a structure capable of reducing damage to the display driving circuitry 420 by the buffer member 480 disposed in the buffer region 450a.

A display of an electronic device and components adjacent to the display may be vulnerable to an impact transmitted from the outside of the electronic device because they are exposed to the outside of the electronic device. In a case that the display and the components adjacent to the display are damaged, the electronic device may not provide a designed function to a user. The electronic device may need a structure for reducing damage to the display.

An electronic device (e.g., the electronic device 300 of FIG. 4A) is provided. According to an embodiment, the electronic device may comprise a display panel (e.g., the display panel 410 of FIG. 4A and FIG. 4B) including a first region (e.g., the first region 411 of FIG. 4A), a bending region (e.g., the bending region 413 of FIGS. 4A and 4B) that extends from the first region and bends, and a second region (e.g., the second region 412 of FIG. 4A and FIG. 4B) extending from the bending region and facing the first region. According to an embodiment, the electronic device may comprise a spacer (e.g., the spacer 450 of FIG. 4A) disposed on a surface (e.g., the surface 412a of FIG. 4A) of the second region. According to an embodiment, the electronic device may include display driving circuitry (e.g., the display driving circuitry 420 of FIG. 4A) disposed on another surface (e.g., the other surface 412b of FIG. 4A) of the second region opposite to the surface of the second region. According to an embodiment, the spacer may include an opening (e.g., the opening 451 of FIG. 4A) or a groove formed to correspond to at least a portion of the second region in which the display driving circuitry is positioned. According to an embodiment, the electronic device may provide a structure capable of reducing damage to a display module by an air gap interposed between the first region and a portion of the second region supporting the display driving circuitry.

An electronic device (e.g., the electronic device 300 of FIG. 4A) is provided. According to an embodiment, the electronic device may comprise a display panel (e.g., the display panel 410 of FIG. 4A and FIG. 4B) including a first region (e.g., the first region 411 of FIG. 4A), a bending region (e.g., the bending region 413 of FIG. 4A and FIG. 4B) that extends from the first region and bends, and a second region (e.g., the second region 412 of FIG. 4A and FIG. 4B) extending from the bending region. According to an embodiment, the electronic device may comprise a spacer (e.g., the spacer 450 of FIG. 4A) disposed on a surface (e.g., the surface 412a of FIG. 4A) of the second region. According to an embodiment, the electronic device may comprise display driving circuitry (e.g., the display driving circuitry 420 of FIG. 4A) disposed on another surface (e.g., the other surface 412b of FIG. 4A) of the second region. According to an embodiment, the spacer may include a buffer region (e.g., the buffer region 450a of FIG. 4A) formed to correspond to at least a portion of a region in which the display driving circuitry is positioned when viewing the second region from above.

According to an embodiment, the buffer region may include an opening (e.g., the opening 451 of FIG. 4A) or a groove (e.g., the groove 452 of FIG. 4C) formed in the spacer.

According to an embodiment, a size of the buffer region may be formed larger than a size of the display driving circuitry.

According to an embodiment, a size of the buffer region may be formed smaller than a size of the display driving circuitry.

According to an embodiment, a size of the buffer region may be formed equal to a size of the display driving circuitry.

According to an embodiment, a size of the opening or the groove may be formed larger than a size of the display driving circuitry.

According to an embodiment, a size of the opening or the groove may be formed smaller than a size of the display driving circuitry.

According to an embodiment, a size of the opening or the groove may be formed equal to a size of the display driving circuitry.

According to an embodiment, a buffer member (e.g., the buffer member 480 of FIG. 9) may be formed in at least a portion of the opening or the groove of the spacer. According to an embodiment, the buffer region of the spacer and a region of the spacer other than the buffer region may be composed of different materials.

According to an embodiment, a material constituting the buffer region of the spacer may have a lower hardness than a material constituting the region other than the buffer region of the spacer.

According to an embodiment, a material constituting the buffer region of the spacer may have higher elasticity than a material constituting the region of the spacer other than the buffer region.

According to an embodiment, a strain of the buffer region of the spacer when an external force is applied may be greater than a strain of the region of the spacer other than the buffer region.

According to an embodiment, the electronic device may include a buffer member disposed on at least a portion of the display driving circuitry.

According to an embodiment, when viewing the other surface of the second region, the display driving circuitry may be positioned in the buffer region.

According to an embodiment, when viewing the other surface of the second region, display driving circuitry may be included in the opening or the groove.

According to an embodiment, the opening or the groove may form an air gap in a direction of the surface of the second region.

According to an embodiment, the spacer may be a layer filling at least a portion of a space between a first region and a second region formed by bending of the display panel.

According to an embodiment, the electronic device may include a printed circuit board (e.g., the printed circuit board 430 of FIG. 4A and FIG. 4B) connected to the second region.

According to an embodiment, the electronic device may provide various functions to a user by including a printed circuit board for supporting one or more components.

According to an embodiment, the electronic device may include a cover member (e.g., the cover member 440 of FIG. 4A and FIG. 4B) disposed along a boundary between the second region and the printed circuit board, and at least partially disposed on the other surface of the second region.

According to an embodiment, a thickness of a portion of the cover member may be different from a thickness of another portion of the cover member.

According to an embodiment, the electronic device may provide a structure capable of reducing damage to the second region and the printed circuit board by a cover member disposed between the printed circuit board and the second region.

According to an embodiment, the display driving circuitry may include a first outer surface (e.g., the first outer surface 421 of FIG. 6) facing the printed circuit board. According to an embodiment, the display driving circuitry may include a second outer surface (e.g., the second outer surface 422 of FIG. 6) opposite to the first outer surface. According to an embodiment, the display driving circuitry may include a third outer surface (e.g., the third outer surface 423 of FIG. 6) connected to an end of the first outer surface and an end of the second outer surface. According to an embodiment, the display driving circuitry may include a fourth outer surface (e.g., the fourth outer surface 424 of FIG. 6) connected to another end of the first outer surface and another end of the second outer surface. According to an embodiment, the cover member may cover the first outer surface, at least a portion of the third outer surface, and at least a portion of the fourth outer surface.

According to an embodiment, the electronic device may provide a structure capable of reducing damage to the display driving circuitry by a cover member at least partially surrounding the display driving circuitry, and the second adhesive member.

According to an embodiment, the display driving circuitry may include a first outer surface (e.g., the first outer surface 421 of FIG. 6) facing the printed circuit board. According to an embodiment, the display driving circuitry may include a second outer surface (e.g., the second outer surface 422 of FIG. 6) opposite to the first outer surface. According to an embodiment, the display driving circuitry may include a third outer surface (e.g., the third outer surface 423 of FIG. 6) connected to an end of the first outer surface and an end of the second outer surface. According to an embodiment, the display driving circuitry may include a fourth outer surface (e.g., the fourth outer surface 424 of FIG. 6) connected to another end of the first outer surface and another end of the second outer surface. According to an embodiment, the cover member may cover the first outer surface, the second outer surface, the third outer surface, and the fourth outer surface.

According to an embodiment, the electronic device may provide a structure capable of reducing damage to the display driving circuitry by a cover member fully covering the display driving circuitry, and the second adhesive member.

According to an embodiment, the electronic device may include a plate (e.g., the plate 416a of FIG. 4A) disposed between the first region and the support member and in contact with the spacer.

According to an embodiment, the electronic device may provide a structure capable of protecting a display by a plate in contact with the spacer.

According to an embodiment, the second region may overlap the first region when the flexible display is viewed along a direction toward which the other surface of the second region faces.

According to an embodiment, the spacer may form an air gap between the plate and the second region.

According to an embodiment, the electronic device may be any one of a foldable device or a rollable device.

An electronic device is provided. According to an embodiment, the electronic device may comprise a display panel including a first region, a bending region that extends from the first region and bends, and a second region extending from the bending region and facing the first region. According to an embodiment, the electronic device may comprise a spacer disposed on a surface of the second region. According to an embodiment, the electronic device may include display driving circuitry disposed on another surface of the second region opposite to the surface of the second region. According to an embodiment, a portion of the spacer corresponding to at least a portion of the second region in which the display driving circuitry is positioned may be formed of a material having a lower hardness than another portion of the spacer.

According to an embodiment, a size of a portion of the spacer corresponding to at least a portion of the second region in which the display driving circuitry is positioned is larger than a size of the display driving circuitry.

According to an embodiment, a size of a portion of the spacer corresponding to at least a portion of the second region in which the display driving circuitry is positioned may be smaller than a size of the display driving circuitry.

According to an embodiment, a size of a portion of the spacer corresponding to at least a portion of the second region in which the display driving circuitry is positioned may be equal to a size of the display driving circuitry.

According to an embodiment, the electronic device may be any one of a foldable device or a rollable device.

According to an embodiment, when an element is referred to as being "on" another element, it is to be understood that the element may be directly on the other element or that one or more intervening elements may be present therebetween. In contrast, when an element is referred to as being "directly on" another element, it is to be understood that there are no intervening elements.

According to an embodiment, relative terms such as "lower" or "bottom" and "upper" or "top" may be used herein to describe a relationship between a component and another component as illustrated in the drawings. The relative terms should be understood to encompass additional orientations of the device in addition to the orientation depicted in the drawings. For example, elements described as being on the "lower" side of other elements may be oriented toward the "upper" side of the other elements in a case that the device is flipped in one of the drawings. Accordingly, the term "lower" may encompass both "lower" and "upper" directions according to a specific orientation of the drawings. Similarly, in a case that the device in one of the drawings is flipped, elements described as being "below" or "beneath" other elements may be oriented as "above" the other elements. Accordingly, the terms "below" or "beneath" may encompass both "upward" and "downward" directions.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 300; 400) comprising:
a display panel (410) including a first region (411), a bending region (413) that extends from the first region (411) and bends, and a second region (412) extending from the bending region (413);
a spacer (450) disposed on or over a surface (412a) of the second region (412); and
display driving circuitry (420) disposed on or over another surface (412b) of the second region (412);
wherein, when viewing the second region (412) from above, the spacer (450) comprises a buffer region (450a) formed to correspond to at least a portion of a region in which the display driving circuitry (420) is positioned.

2. The electronic device (101; 300; 400) of Claim 1,
wherein the buffer region (450a) comprises an opening (451) or a groove (452) formed in the spacer (450).

3. The electronic device (101; 300; 400) of Claim 2,
wherein the opening (451) or the groove (452) of the spacer (450) forms an air gap (g1).

4. The electronic device (101; 300; 400) of Claim 2,
wherein a buffer member (480) is formed in at least a portion of the opening (451) or the groove (452) of the spacer (450).

5. The electronic device (101; 300; 400) of Claim 1,
wherein the buffer region (450a) of the spacer (450) and a region of the spacer (450) other than the buffer region (450a) are composed of different materials.

6. The electronic device (101; 300; 400) of Claim 5,
wherein a material constituting the buffer region (450a) of the spacer (450) has a lower hardness than a material constituting the region of the spacer (450) other than the buffer region (450a).

7. The electronic device (101; 300; 400) of Claim 5,
wherein a material constituting the buffer region (450a) of the spacer (450) has higher elasticity than a material constituting the region of the spacer (450) other than the buffer region (450a).

8. The electronic device (101; 300; 400) of any one of Claims 1 to 7,
wherein, when an external force is applied, a strain of the buffer region (450a) of the spacer (450) is greater than a strain of the region of the spacer (450) other than the buffer region (450a).

9. The electronic device (101; 300; 400) of any one of Claims 1 to 8, further comprising:
a buffer member (480) disposed on at least a portion of the display driving circuitry (420).

10. The electronic device (101; 300; 400) of any one of Claims 1 to 9,
wherein a size of the buffer region (450a) is formed larger than a size of the display driving circuitry (420).

11. The electronic device (101; 300; 400) of any one of Claims 1 to 9,
wherein a size of the buffer region (450a) is formed smaller than a size of the display driving circuitry (420).

12. The electronic device (101; 300; 400) of any one of Claims 1 to 9,
wherein a size of the buffer region (450a) is formed identical to a size of the display driving circuitry (420).

13. The electronic device (101; 300; 400) of any one of Claims 1 to 12,
wherein, when viewing the another surface (412b) of the second region (412), the display driving circuitry (420) is positioned within the buffer region (450a).

14. The electronic device (101; 300; 400) of any one of Claims 1 to 13,
wherein the spacer (450) is a layer that fills at least a portion of a space formed between the first region and the second region formed by bending of the display panel.

15. The electronic device (101; 300; 400) of any one of Claims 1 to 14, further comprising a printed circuit board (430) connected to the second region (412).
